# EUROPÄISCHE PATENTSCHRIFT

(11) **EP 0 722 567 B1**
(45) Veröffentlichungstag und Bekanntmachung des Hinweises auf die Patenterteilung: **23.10.2002**
(21) Anmeldenummer: 95927646.0
(22) Anmeldetag: 04.08.1995
(51) Int. Cl.: G01N 27/28

(54) **MESSEINRICHTUNG ZUR ANALYSE VON FLUIDEN**
MEASUREMENT DEVICE FOR THE ANALYSIS OF FLUIDS
DISPOSITIF DE MESURE DESTINE A L'ANALYSE DE FLUIDES

(30) Priorität: 05.08.1994 DE 4427725
(43) Veröffentlichungstag der Anmeldung: 24.07.1996
(73) Patentinhaber: INSTITUT FUR CHEMO- UND BIOSENSORIK Münster E.V., 48149 Münster (DE)
(72) Erfinder: DUMSCHAT, Christa, D-48161 Münster (DE)
(74) Vertreter: Pfenning, Meinig & Partner
(86) Internationale Anmeldenummer: DE9501041
(87) Internationale Veröffentlichungsnummer: WO96004548

(56) Entgegenhaltungen:
- EP-A- 0 399 227
- WO-A-93/00994
- AT-B- 391 634
- US-A- 5 114 859
- US-A- 5 145 565

## Beschreibung

Die Erfindung betrifft eine Meßeinrichtung, bestehend aus einem Behälter in Form einer Spritze, in den über mindestens eine Kanüle als Ansaugeinrichtung ein Fluid ansaugbar ist, wobei in der Behälterwand oder an der Behälterwand ein Sensor so integriert ist, daß er mit dem in den Hohlraum des Behälters ansaugbaren Fluid in Kontakt treten kann. Die Erfindung betrifft weiterhin die Verwendung dieser Meßeinrichtung.

Zur Bestimmung der Konzentrationen in einer Lösung gelöster Ionen oder Molekülen mittels chemischer Sensoren wird die zu bestimmende Lösung aus ihrem Ursprungsort entnommen, in ein geeignetes Gefäß gefüllt und die Messung durch Eintauchen des Sensors vorgenommen.

Eine andere Meßmethode arbeitet mit dem Durchflußprinzip. Dabei strömt die Analysenlösung an einem Sensor vorbei. Auch hierzu wird die zu untersuchende Lösung zuerst entnommen und dann an dem Sensor vorbeigeführt. Ein derartiges Meßprinzip ist z.B. in J. Ruzicka, E. H. Hansen: Flow Injection-Analysis, New York, John Wiley Sous, 1981, beschrieben. Diese beiden Methoden eignen sich nur bedingt für die schnelle Vor-Ort-Bestimmung, die in der modernen Analytik immer mehr an Bedeutung gewinnt, da sie zu aufwendig sind und qualifiziertes Personal erfordern. Für diese Anwendungsfälle wurden Analyseplättchen oder Teststreifen entwickelt.

Mit Analyseplättchen arbeiten verschiedene kommerziell erhältliche Systeme, insbesondere zur Blutbestimmung (z.B. Kodak Ektachem DT II System, Kodak AG, Klinische Chemie, Postfach 60 03 45, Stuttgart). Dabei wird zuerst Blut abgenommen und dann das Blut mittels einer Pipette aufgetragen. Sodann erfolgt die Messung.

Ein analoger Verfahrensablauf findet bei der Messung mit elektrochemischen Teststreifen statt.

Die Probe wird also zur schnellen Vor-Ort-Bestimmung an ihrem Ursprungsort entnommen und in einem zweiten Schritt auf den Sensor aufgebracht.

Diese Arbeitsweise ist aber für verschiedene Bestimmungen, insbesondere bei Blutbestimmungen, Analysen von toxischen und empfindlichen Substanzen nachteilig.

Bei der Analyse von infektösen Untersuchungsmedien, z.B. Blut, ist es nämlich bei unvorsichtigem Arbeiten mit Blutstropfen möglich, daß eine Infektion oder eine Verschüttung der Probe eintritt. Weiter nachteilig ist, daß in einem offenen Flüssigkeitstropfen eine Veränderung der Analytkonzentration durch Verdampfen oder Aufnahme von Luftbestandteilen (z.B. Veränderung des pH-Wertes) möglich ist. Letztlich ist es auch in vielen Fällen wünschenswert, daß vor der eigentlichen Messung eine Kalibrierung durchgeführt wird, dies vor allem deshalb, weil die in den vorstehend beschriebenen Verfahrensweisen eingesetzten Einmalsensoren nicht in allen Fällen reproduzierbar herstellbar sind. Eine derartige Kalibrierung ist aber mit den vorstehend beschriebenen Methoden nicht möglich.

Als eine Lösung für dieses Problem wurde das i-STAT Sensorsystem entwickelt (i-STAT Corporation / 303A College Road East, Princeton). Hierbei befinden sich Einmalsensoren in einer Kartusche in einem Fließkanal. Eine Eichlösung befindet sich in einem Kunststoffbeutel in der Kartusche. Die Eichung und die Messung erfolgen über einen komplizierten Meßablauf. Zunächst wird die Probe über Kapillarkräfte in den vorderen Bereich des Fließkanals gefüllt. Dann wird der Kunststoffbeutel mittels eines Dornes durch Druck auf die Kartusche zerstört. Die Eichlösung fließt über den Sensor. Als nächstes wird die Probe durch Druck auf die Kartusche über den Sensor befördert. Dieses Meßsystem erlaubt eine schnelle Vor-Ort-Konzentrationsbestimmung, ist aber infolge seines komplizierten Aufbaus teuer. Außerdem eignet sich die Kartusche nicht direkt zur Probennahme.

Ausgehend hiervon, ist es deshalb die Aufgabe der vorliegenden Erfindung, eine Meßeinrichtung vorzuschlagen, mit der es möglich ist, eine einfache, kostengünstige, schnelle und reproduzierbare Vor-Ort-Bestimmung vorzunehmen. Gleichzeitig sollen mit der Meßeinrichtung exakte Meßergebnisse erzielbar sein.

Diese Aufgabe wird durch die kennzeichnenden Merkmale des Anspruches 1 gelöst, hinsichtlich der Verwendung der Meßeinrichtung durch die kennzeichnenden Merkmale des Anspruches 12 und folgende. Die Unteransprüche zeigen vorteilhafte Weiterbildungen auf.

Erfindungsgemäß wird demnach eine Meßeinrichtung vorgeschlagen, die aus einem Behälter in Form einer Spritze besteht, in den ein Fluid, d.h. die zu untersuchende Lösung (Analyt), über mindestens eine Kanüle einsaugbar ist, wobei in der Behälterwand oder an der Behälterwand ein Sensor integriert ist, und zwar in der Weise, daß er mit dem in den Behälter einsaugbaren Analyten in Kontakt treten kann, so daß eine direkte Probennahme möglich ist. Der Behälter weist erfindungsgemäß mindestens einen ein Reservoir enthaltenden Kolben auf, in den eine Kalibrierlösung einfüllbar ist. Dadurch kann der Analyt in den Behälter direkt eingesaugt werden, und es wird somit sichergestellt, daß der Analyt direkt von seinem Entstehungsort entnommen und dem Sensor zugeführt werden kann.

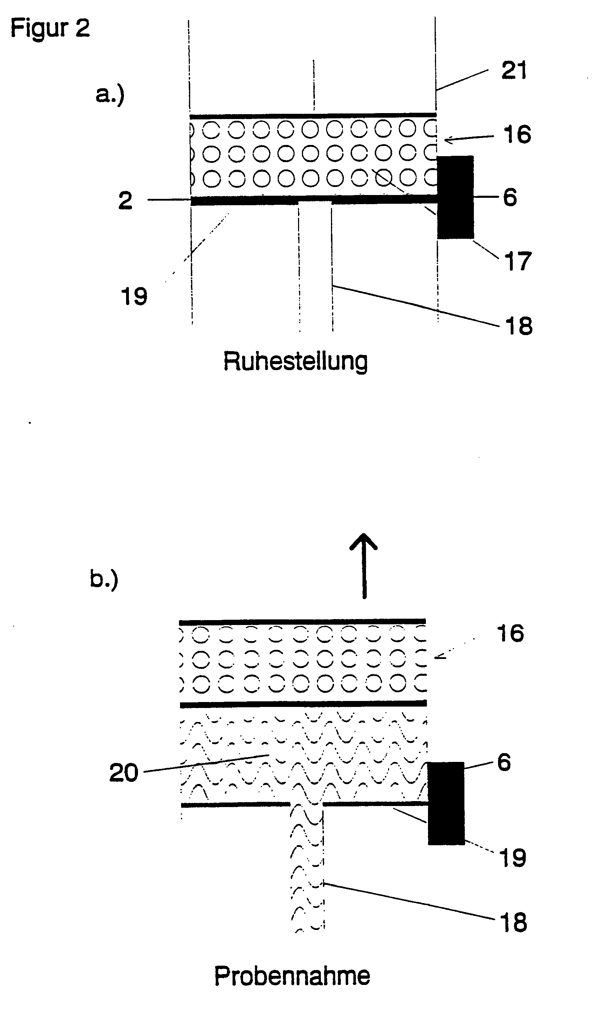

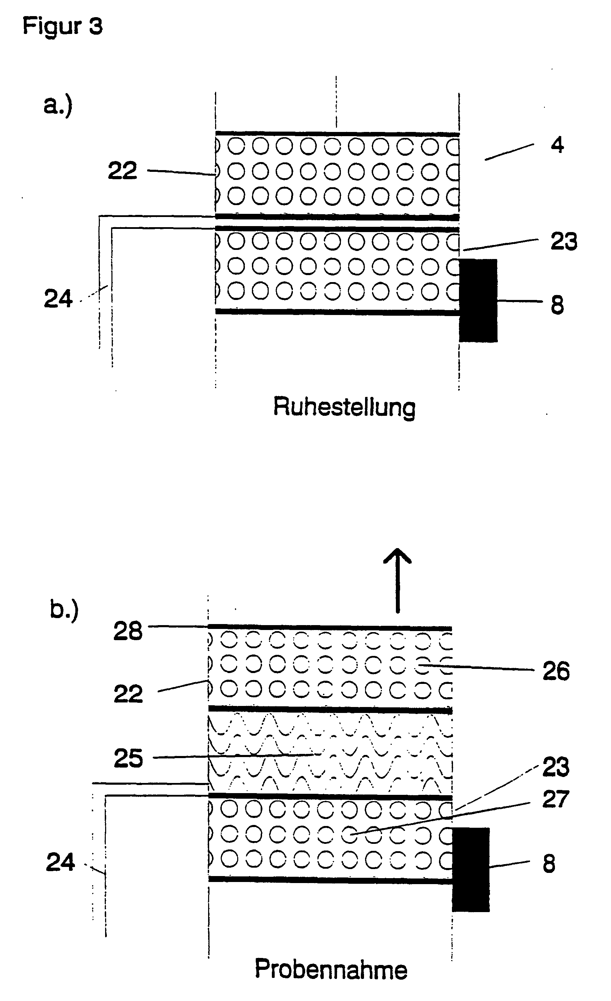

Wesentlich bei der erfindungsgemäßen Vorrichtung ist der Umstand, daß der Analyt direkt angesaugt und ohne zwischengeschaltete Verfahrensschritte direkt mit dem im Behälter integrierten Sensor in Kontakt treten kann. Dadurch, daß der Behälter in Form einer Spritze ausgebildet ist, kann somit z.B. das Blut direkt von einem Patienten durch Ansaugen mit der Spritze entnommen und sofort dem Behälter mit dem dort angeordneten Sensor zugeführt werden. Die Messung erfolgt dann entweder sofort oder, wie in den Ausführungsformen nach Fig. 2 und 3 gezeigt, nach Abnahme des Fluids und Zwischenlagerung.

Wesentlich beim Anmeldungsgegenstand ist, daß im Behälter mindestens ein Kolben mit einem Reservoir zur Aufnahme der Kalibierlösung vorgesehen ist. Dadurch ist eine einfache, schnelle und exakte sowie reproduzierbare Messung möglich. Analog dazu kann bei allen anderen Anwendungsfällen verfahren werden, z.B. bei Luftmessungen durch direktes Ansaugen der Luft oder bei anderen Fluiden, wie z.B. bei Wasser, durch direktes Entnehmen des Wassers mit der Meßeinrichtung über die in dem Behälter angeordnete Öffnung. Bevorzugt weist die Meßeinrichtung einen ein Reservoir aufweisenden Kolben und ein-ebenfalls im Hohlraum bewegliches Dichtelement auf. Anstatt des Dichtelementes kann ein zweiter beweglicher Kolben, bevorzugt mit Reservoir, angeordnet sein. Dadurch wird es möglich, das Fluid anzusaugen und die Auswertung erst später vorzunehmen. Die Kanüle bzw. der Kanülenanschluß ist dabei so ausgelegt, daß das Fluid in dem zwischen den beweglichen Teilen (Kolben und Kolben oder Dichtelement) entstehenden Hohlraum gelangen kann. Bevorzugt ist die Kanüle deshalb durch mindestens einen Kolben oder das Dichtelement hindurchgeführt. Eine andere Möglichkeit besteht darin, die Kanüle bzw. den Kanülenanschluß von außen durch die Behälterwand zu führen Bevorzugt ist es, bei der Meßeinrichtung den (die) Sensor(en) an der Außenfläche der Behälterwand über einer Durchbrechung, die in den Hohlraum des Behälters führt, anzuordnen. Diese Ausführungsform der Erfindung ist deshalb besonders bevorzugt, da es verfahrenstechnisch und produktionstechnisch sehr einfach ist, an an und für sich aus dem Stand der Technick bekannten Behältern, nämlich Durchbrechungen anzubringen und an dessen Außenflächen einen Sensor zu befestigen. Die Dimensionierung der Durchbrechung richtet sich nach dem für den Anwendungsfall ausgewählten Sensor. Es muß hierbei lediglich sichergestellt sein, daß die sensoraktive Fläche, die in das Innere des Hohlraumes des Behälters gerichtet ist, die Durchbrechung nach außen hin abdichtet, so daß verhindert wird, daß das in den Behälter ansaugbare Fluid nach außen hindurchtreten kann. Der (die) Sensor(en) sind dabei so angeordnet, daß das in den Behälter einsaugbare Fluid mit dem Sensor in Kontakt treten kann. Da es im Regelfall wünschenswert ist, nur relativ kleine Mengen zu analysieren, wird die Meßeinrichtung auch so ausgewählt, daß das Volumen des Behälters im Bereich von 10 µl bis 100 ml liegt. Eine weitere vorteilhafte Ausführungsform ist es, eine Sensorcard, die einen oder mehrere Sensoren enthält, direkt zum Spritzenkörper weiterzuverarbeiten oder die Sensoren durch Abscheiden verschiedener Schichten direkt auf dem Spritzenkörper herzustellen.

Die Auswahl des Sensors richtet sich nach dem anliegenden Meßproblem. Die Meßeinrichtung ist grundsätzlich für alle an und für sich aus dem Stand der Technik bekannten Sensoren anwendbar, sofern sie sich in die Behälterwand integrieren lassen. Geeignete Sensoren sind z.B. ionenselektive Elektroden, wie z.B. ionenselektive Elektroden für NH₄⁺, Ca²⁺, H⁺, Li⁺, K⁺, Na⁺, NO₃⁻ oder Biosensoren, wie z.B. Biosensoren für Harnstoff oder Glukose oder amperometische Sensoren, wie z.B. Sensoren zur Bestimmung von Sauerstoff oder Schwermetallen. Die Sensoren sind bevorzugt als Einmalsensor ausgebildet.

Die Erfindung betrifft weiterhin die Verwendung der vorstehend beschriebenen Meßeinrichtung zur Analyse von Flüssigkeiten und Gasen. Besonders geeignet ist die erfindungsgemäße Meßeinrichtung für Blutanalysen. Hierbei kann die Meßeinrichtung z.B. zur Bestimmung von Blutelektrolyten, Glukose, Harnstoff oder Sauerstoff eingesetzt werden. Andere geeignete Anwendungsfälle sind die Wasseranalyse, hier insbesondere die Analyse von Schwermetallen, Sauerstoff oder Pestiziden. Die erfindungsgemäße Meßeinrichtung kann auch zur Luftanalyse, wie z.B. zur Bestimmung von CO, CO₂ oder Ammoniak, verwendet werden.

Weitere Merkmale, Einzelheiten und Vorzüge der Erfindung ergeben sich aus der Beschreibung zweier bevorzugter Ausführungsformen der Erfindung anhand der Zeichnungen. Hierbei zeigen:
- Fig. 1: den prinzipiellen Aufbau der erfindungsgemäßen Meßeinrichtung, wobei der Behälter in Form einer Spritze ausgebildet ist,
- Fig. 2: den prinzipiellen Aufbau mit einem Kolben und einem beweglichen Dichtelement, und
- Fig. 3: den prinzipiellen Aufbau mit zwei Kolben.

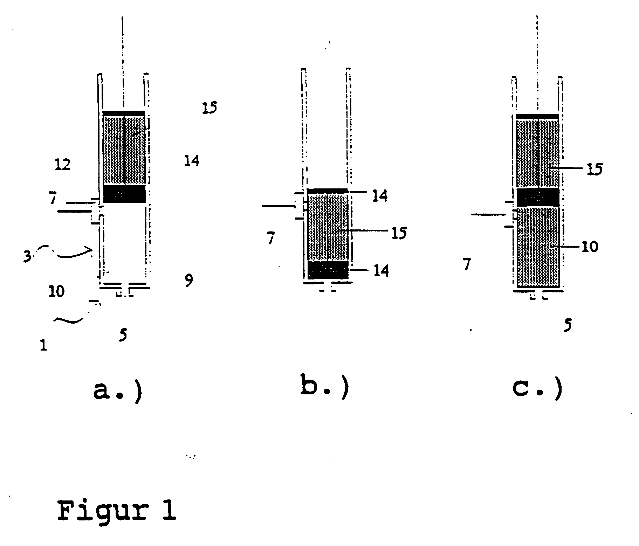

Fig. 1 zeigt die Ausführungsform der Erfindung, bei der der Behälter als Einmalspritze ausgebildet ist.

Die Meßeinrichtung 1 besteht aus einem in Spritzenform ausgebildeten Behälter 3, der mit einer Öffnung 5 zum Ansaugen des Fluides versehen ist. Als Spritze kann eine aus dem Stand der Technik bekannte Einmalspritze, so wie sie für medizinische Anwendungen eingesetzt wird, verwendet werden. Für die Meßeinrichtung 1 wird diese an und für sich aus dem Stand der Technik bekannte Spritze so modifiziert, daß in die Behälterwand 9 an einer geeigneten Stelle eine Durchbrechung 12 angebracht wird, und daß auf der Außenseite der Behälterwand 9 ein Sensor 7 befestigt wird. Im Beispielsfall nach Fig. 1 ist der Sensor ein kaliumsensitiver Sensor. Der Sensor ist dabei so über der Durchbrechung 12 angeordnet, daß er die Durchbrechung 12 gegenüber dem Hohlraum 10 dicht verschließt. Die Meßeinrichtung 1 weist als Ansaugvorrichtung einen Kolben 14 auf, der mit einem Reservoir 15 versehen ist. Diese Ausgestaltung der Erfindung erlaubt es, daß in das Reservoir 15 eine Kalibrierlösung eingefüllt werden kann. Dazu kann in dem nach außen gerichteten Teil des Kolbens 14 eine Öffnung sein, durch die die Kalibrierlösung eingefüllt wird. Es ist auch möglich, den oberen Teil des Kolbens 14 abnehmbar auszugestalten. Der Sensor 7 wird nun räumlich an der Behälterwand 9 so angeordnet, daß bei Betätigung des Kolbens 15 in Richtung der Öffnung 5 die sensoraktive Fläche mit der Kalibrierlösung in Kontakt kommt. Dies ist in der Fig. 1b schematisch dargestellt. Zur Messung wird demnach der Kolben 14 aus der Ruhestellung (Fig. 1a) nach unten bewegt. Dieser Zustand ist in Fig. 1b veranschaulicht. Der Sensor kann nun mittels der Kalibrierlösung, die in dem Reservoir 15 untergebracht ist, kalibriert werden. Zur Messung wird mit einer an der Öffnung 5 angebrachten Kanüle (nicht abgebildet) das Fluid, d.h. der Analyt, direkt aus dem Entstehungsort entnommen und durch Bewegung des Kolbens 14 in den Hohlraum 10 des Behälters 3 angesaugt.

Somit steht eine Meßeinrichtung zur Verfügung, die ohne Zwischenschaltung eines Verfahrensschrittes direkt das zu untersuchende Fluid vom Entstehungsort dem Sensor zuführen kann. Besonders vorteilhaft bei der vorstehend beschriebenen Ausführungsform ist, daß in einem Arbeitsgang gleichzeitig eine Kalibrierung erfolgt und ein Einsaugen des zu untersuchenden Fluids, z.B. Blut, möglich wird. Die Dimensionierung des Behälters richtet sich dabei nach dem zu untersuchenden Medium und beträgt in der Ausführungsform nach Fig. 1 0,5 ml. Die Spritze selbst kann dabei aus allen herkömmlichen Materialien, wie sie bisher auch für Spritzen verwendet werden, bestehen.

Zur Auswertung der mit dem Sensor aufgenommenen Meßergebnisse ist es möglich, daß zum einen der Sensor direkt mit einer Auswerteeinheit verbunden ist, oder daß die Meßwerte gespeichert werden und dann separat der Auswerteeinrichtung zugeführt werden.

Fig. 2 zeigt den prinzipiellen Aufbau einer Meßeinrichtung 2, wobei hier ein Kolben 16 mit mindestens einem Reservoir 17 und ein im Hohlraum 20 der Meßeinrichtung 2 bewegliches Dichtelement 19 mit einer darin integrierten Kanüle 18 vorgesehen ist (Fig. 1a). Die Kanüle 18 ist verschließbar bzw. abnehmbar und der Anschluß verschließbar. Diese Anordnung hat den Vorteil, daß das Fluid vom Patienten entnommen und dann die Auswertung der Messung an einer separaten Meßeinrichtung durchgeführt werden kann. Die Spritze muß in diesem Fall also nicht direkt bei der Probennahme an die Meßeinrichtung angeschlossen sein, sondern kann zwischengelagert werden.

Das Ansaugen wird so vorgenommen, daß der bewegliche Kolben 16 nach oben (Pfeilrichtung) gezogen wird, so daß sich dann in dem entstehenden Hohlraum 20 das Fluid ansammelt. Die Spritze kann nun mit diesem so gefüllten Fluid zwischengelagert und zu einem geeigneten Zeitpunkt auch an einer externen Auswerteeinheit vermessen werden. Diesen Zustand zeigt Fig. 2b. Die Messung wird in der Weise durchgeführt, daß der Kolben 16 mit dem in dem Hohlraum 20 darunter befindlichen Fluid und das Dichtelement mit der Kanüle 18, die verschlossen ist, gemeinsam am Sensor 6 vorbeigeführt wird. Der Sensor hat in diesem Fall zuerst mit dem Fluid Kontakt und dann mit der Kalibrierlösung. Somit läßt sich eine exakte und reproduzierbare Messung ermöglichen. Die Positionierung des Sensors 6 kann dabei so gewählt werden, daß er auch schon in der Ruhestellung (Fig. 2a) Kontakt mit der Kalibrierlösung hat. Dadurch wird sichergestellt, daß der Sensor bereits befeuchtet ist und sich später leichter bei der Messung anpaßt. Ob nun der Sensor bereits in der Ruhestellung mit der Kalibrierlösung Kontakt hat oder nicht, hängt von dem einzusetzenden Sensor ab. Es gibt Sensoren, die besser in befeuchtetem Zustand gelagert werden (wie z.B. Sauerstoffsensoren und Referenzelektroden) oder Sensoren, die besser trocken gelagert werden (z.B. ionenselektive Elektroden oder Biosensoren). Die Positionierung des Sensors erfolgt demnach entsprechend der anliegenden Meßproblematik.

In Abwandlung der Ausführung nach Fig. 2 ist es selbstverständlich auch möglich, statt dem Dichtelement 19 mit der Kanüle 18 einen zweiten Kolben anzubringen, der ebenfalls beweglich im Hohlraum 20 der Meßeinrichtung 2 ist. In diesem Fall ist die Kanüle durch den Kolben geführt, so daß dann auch das Fluid in den Hohlraum 20 gelangen kann. Es ist auch möglich, daß zur Bewegung des Dichtelements 19 bzw. eines zweiten Kolbens noch eine zusätzliche Vorrichtung in Form eines Steges, wie er beim Kolben 16 gezeigt ist, angebracht ist, damit die Bewegung des zweiten Kolbens bzw. Dichtelements unterstützt werden kann.

Mit diesem zweiten Steg wird eine weitere Abwandlung der Ausführung nach Fig. 2 möglich, nämlich die Sensoren oberhalb des Kolbens 16 anzubringen, sie dann während der Aufnahme der Meßlösung schon mit der Kalibrierlösung in Kontakt zu bringen und zur Messung Kolben, Fluid und Kalibrierlösung nach oben am Sensor vorbei zu bewegen. Das hat den Vorteil, daß in der Zeit zwischen Probenaufnahme und Messung eine Konditionierung der Sensoren mit der Kalibrierlösung stattfindet, was zu einer verkürzten Meßzeit führt.

Fig. 3 zeigt eine weitere Ausführungsform der erfindungsgemäßen Lösung, und zwar in der Weise, daß hier eine Meßeinrichtung 4 mit zwei beweglichen Kolben 22 und 23, die jeweils ein Reservoir 26 und 27 aufweisen, versehen ist. Die Funktionsweise entspricht der bereits in Fig. 2 beschriebenen. Im Unterschied zur Ausführungsform nach Fig. 2 ist die Kanüle 24 seitlich an die Behälterwand 28 angeflanscht. Die Probennahme wird wieder so durchgeführt, daß über die Kanüle 24 das Fluid durch Betätigen des Kolbens 22 angesaugt wird. Das Fluid sammelt sich somit im dadurch entstehenden Hohlraum 25. In dieser Stellung (Fig. 3b) kann die Meßeinrichtung wieder gelagert werden und dann bei Bedarf an die entsprechende Auswerteeinheit angeschlossen werden. Die Messung folgt wieder analog der bereits in Fig. 2 beschriebenen Verfahrensweise. Dazu wird der Kolben 26 nach unten gedrückt, so daß sich die Kalibrierlösung des Kolbens 23 und das Fluid im Hohlraum 25 sowie die Kalibrierlösung im Kolben 22 am Sensor 8 vorbeibewegen. Analog zur Ausführungsform nach Fig. 2 ist es auch hierbei möglich, daß der zweite Kolben 23 entweder so ausgeführt ist, daß er entsprechend im Hohlraum 25 des Behälters 4 geführt ist oder daß zur Unterstützung der Bewegung noch ein zusätzlicher Steg vorgesehen ist. Hier ist es analog Beispiel 2 auch wieder möglich, die Sensoren oberhalb von Kolben 22 anzuordnen und den Steg nach der Aufnahme des Fluids dazu zu nutzen, eine Bewegung aller Kolben und Lösungen von unten nach oben durchzuführen und dadurch die einzelnen Lösungen am Sensor vorbeizuführen. Dadurch würde wieder eine Konditionierung der Sensoren mit Kalibrierlösung zwischen Probenaufnahme und Messung möglich werden. Die Kanüle 24 ist, wie auch in Fig. 3 bereits beschrieben, gegenüber dem Hohlraum 25 verschließbar. Dadurch wird ein sicherer Transport und eine Lagerung des Fluids ermöglicht.

## Patentansprüche

1. Meßeinrichtung zur Analyse von Fluiden, bestehend aus einem Behälter, in den über mindestens eine Öffnung ein Fluid über eine Ansaugeinrichtung ansaugbar ist, und mindestens einem Sensor, der entweder in der Behälterwand integriert oder an der Behälterwand befestigt ist, wobei der (die) Sensor(en) so angeordnet ist (sind), daß er (sie) mit dem in den Hohlraum ansaugbaren Fluid in Kontakt treten kann (können),
**dadurch gekennzeichnet,**
**daß** der Behälter in Form einer Spritze (1,2,4) ausgebildet ist, in dessen Hohlraum (10,20,25) mindestens ein ein Reservoir (15,17,26,27) aufweisender Kolben (14,16,22,23) führbar ist, und daß über mindestens eine Kanüle (18,24) als Ansaugeinrichtung ein Fluid in den Hohlraum ansaugbar ist, wobei der (die) Sensor(en) (6,7,8) so angeordnet ist (sind), daß er (sie) durch Betätigen des Kolbens (14,16,22,23) sowohl mit der in dem Reservoir (15,17,26,27) enthaltenen Kalibrierlösung als auch mit dem Fluid in Kontakt treten kann (können).

2. Meßeinrichtung nach Anspruch 1,
**dadurch gekennzeichnet, daß** ein ein Reservoir (17) aufweisender Kolben (16) und ein im Hohlraum (10, 20, 25) führbares Dichtelement (19) vorgesehen ist.

3. Meßeinrichtung nach Anspruch 1,
**dadurch gekennzeichnet, daß** zwei ein Reservoir (26,27) aufweisende Kolben (22,23) vorgesehen sind.

4. Meßeinrichtung nach mindestens einem der Ansprüche 1 bis 3,
**dadurch gekennzeichnet, daß** die Kanüle (18,24) oder ein Kanülenanschluß durh das Dichtelement (19) und/oder durch mindestens einen Kolben (16) geführt ist.

5. Meßeinrichtung nach mindestens einem der Ansprüche 1 bis 3,
**dadurch gekennzeichnet, daß** die Kanüle (18,24) oder ein Kanülenanschluß von außen durch die Behälterwand (9,21,28) geführt ist.

6. Meßeinrichtung nach mindestens einem der Ansprüche 1 bis 5,
**dadurch gekennzeichnet, daß** die Kanüle (18,24) oder der Kanülenzugang, nach Abnehmen der Kanüle (18,24) verschließbar ausgebildet ist.

7. Meßeinrichtung nach mindestens einem der Ansprüche 1 bis 6,
**dadurch gekennzeichnet, daß** der (die) Sensor(en) (6,7,8) an der Außenfläche der Behälterwand (9,21,28) über eine Durchbrechung (12), die in den Hohlraum des Behälters führt, befestigt ist (sind).

8. Meßeinrichtung nach mindestens einem der Ansprüche 1 bis 7,
**dadurch gekennzeichnet, daß** der (die) Sensor(en) (6,7,8) ein Einmalsensor ist (sind).

9. Meßeinrichtung nach mindestens einem der Ansprüche 1 bis 8,
**dadurch gekennzeichnet, daß** das Fluid eine Flüssigkeit, wie Blut oder Wasser, oder ein Gas, wie Luft, ist.

10. Meßeinrichtung nach mindestens einem der Ansprüche 1 bis 9,
**dadurch gekennzeichnet, daß** der (die) Sensor(en) (6,7,8) eine ionenselektive Elektrode oder ein Biosensor oder ein amperometrischer Sensor oder ein optischer Sensor oder ein Gassensor ist (sind).

11. Meßeinrichtung nach mindestens einem der Ansprüche 1 bis 10,
**dadurch gekennzeichnet, daß** der (die) Sensor(en) (6,7,8) eine ionenselektive Elektrode für NH₄⁺ oder Ca²⁺ oder H⁺ oder Li⁺ oder K⁺ oder Na⁺ oder NO₃- ist (sind).

12. Meßeinrichtung nach mindestens einem der Ansprüche 1 bis 11,
**dadurch gekennzeichnet, daß** der (die) Sensor(en) (6,7,8) ein Biosensor zur Bestimmung von Harnstoff oder Glukose oder Pestiziden ist (sind).

13. Meßeinrichtung nach mindestens einem der Ansprüche 1 bis 12,
**dadurch gekennzeichnet, daß** der (die) Sensor(en) (6,7,8) ein amperometischer Sensor zur Bestimmung von Sauerstoff oder Schwermetalle ist (sind).

14. Verwendung der Meßeinrichtung nach mindestens einem der Ansprüche 1 bis 13 zur Analyse von Flüssigkeiten und Gasen.

15. Verwendung der Meßeinrichtung nach Anspruch 14,
**dadurch gekennzeichnet, daß** sie zur Blutanalyse eingesetzt wird.

16. Verwendung der Meßeinrichtung nach Anspruch 15,
**dadurch gekennzeichnet, daß** sie zur Bestimmung von Blutelektrolyten oder Glukose oder Harnstoff oder Sauerstoff eingesetzt wird.

17. Verwendung der Meßeinrichtung nach Anspruch 14,
**dadurch gekennzeichnet, daß** sie zur Wasseranalyse eingesetzt wird.

18. Verwendung der Meßeinrichtung nach Anspruch 17,
**dadurch gekennzeichnet, daß** Nitrat oder Schwermetalle oder Sauerstoff oder Pestizide bestimmt werden.

19. Verwendung der Meßeinrichtung nach Anspruch 14,
**dadurch gekennzeichnet, daß** sie zur Luftanalyse eingesetzt wird.

20. Verwendung der Meßeinrichtung nach Anspruch 19,
**dadurch gekennzeichnet, daß** CO oder CO₂ oder NH₃ bestimmt wird.

## Claims

1. A measuring device for analysing fluids, consisting of a container, into which a fluid can be drawn through at least one opening across a suction device, and at least one sensor, which is either integrated in or attached to the container wall, the sensor(s) being arranged in such a way that it (they) can come into contact with the fluid drawable into the hollow space by suction,
**characterised in that** the container is designed in the form of a syringe (1, 2, 4) into the hollow space (10, 20, 25) of which at least one plunger (14, 16, 22, 23) having a reservoir (15, 17, 26, 27) is guidable, and that a fluid is drawable into the hollow space via at least one cannula (18, 24) as a suction device, the sensor(s) (6, 7, 8) being arranged in such a way that by actuation of the plunger (14, 16, 22, 23) it (they) can come into contact both with the calibration solution contained in the reservoir (15, 17, 26, 27) and with the fluid.

2. A measuring device according to Claim 1,
**characterised in that** a plunger (16) possessing a reservoir (17), and a sealing member (19) guidable within the hollow space (10, 20, 25) are provided.

3. A measuring device according to Claim 1,
**characterised in that** two plungers (22, 23) possessing a reservoir (26, 27) are provided.

4. A measuring device according to at least one of Claims 1 to 3,
**characterised in that** the cannula (18, 24) or a cannula connector is guided through the sealing member (19) and/or through at least one plunger (16).

5. A measuring device according to at least one of Claims 1 to 3,
**characterised in that** the cannula (18, 24) or a cannula connector is guided through the container wall (9, 21, 28) from the outside.

6. A measuring device according to at least one of Claims 1 to 5,
**characterised in that** the cannula (18, 24) or the cannula access is designed so as to be closable after withdrawal of the cannula (18, 24).

7. A measuring device according to at least one of Claims 1 to 6,
**characterised in that** the sensor(s) (6, 7, 8) is (are) attached to the outside of the container wall (9, 21, 28) via a perforation (12) which leads into the hollow space of the container.

8. A measuring device according to at least one of Claims 1 to 7,
**characterised in that** the sensor(s) (6, 7, 8) is (are) an expendable sensor.

9. A measuring device according to at least one of Claims 1 to 8,
**characterised in that** the fluid is a liquid such as blood or water, or a gas such as air.

10. A measuring device according to at least one of Claims 1 to 9,
**characterised in that** the sensor(s) (6, 7, 8) is (are) an ion-selective electrode or a biosensor or an amperometric sensor or an optical sensor or a gas sensor.

11. A measuring device according to at least one of Claims 1 to 10,
**characterised in that** the sensor(s) (6, 7, 8) is (are) an ion-selective electrode for NH₄⁺ or Ca²⁺ or H⁺ or Li⁺ or K⁺ or Na⁺ or NO₃⁻.

12. A measuring device according to at least one of Claims 1 to 11,
**characterised in that** the sensor(s) (6, 7, 8) is (are) a biosensor for analysing urea or glucose or pesticides.

13. A measuring device according to at least one of Claims 1 to 12,
**characterised in that** the sensor(s) (6, 7, 8) is (are) an amperometric sensor for analysing oxygen or heavy metals.

14. A use of the measuring device according to at least one of Claims 1 to 13 for analysing liquids and gases.

15. A use of the measuring device according to Claim 14, **characterised in that** it is used for the analysis of blood.

16. A use of the measuring device according to Claim 15, **characterised in that** it is used for analysing blood electrolytes or glucose or urea or oxygen.

17. A use of the measuring device according to Claim 14, **characterised in that** it is used for the analysis of water.

18. A use of the measuring device according to Claim 17, **characterised in that** nitrate or heavy metals or oxygen or pesticides are analysed.

19. A use of the measuring device according to Claim 14, **characterised in that** it is used for the analysis of air.

20. A use of the measuring device according to Claim 19, **characterised in that** CO or CO₂ or NH₃ are analysed.

## Revendications

1. Dispositif de mesure pour l'analyse de fluides, constitué par un récipient, dans lequel un fluide peut être aspiré par l'intermédiaire d'au moins une ouverture par un dispositif d'aspiration, et au moins un capteur, qui soit est intégré dans la paroi du récipient, soit est fixé sur la paroi du récipient, le ou les capteurs étant disposé de telle sorte qu'il(s) peut(peuvent) venir en contact avec le fluide pouvant être aspiré dans la cavité, **caractérisé en ce que** le récipient est agencé sous la forme d'une seringue (1, 2, 4), dans la cavité (10, 20, 25) de laquelle peut être guidé au moins un piston (14, 16, 22, 23), qui comporte un réservoir (15, 17, 26, 27), et qu'un fluide peut être aspiré dans la cavité par l'intermédiaire d'au moins une canule (18, 24) en tant que dispositif d'aspiration, le(les) capteur(s) (6, 7, 8) étant disposé(s) de telle sorte qu'il(s) peut(peuvent) venir en contact, sous l'effet de l'actionnement du piston (14, 16, 22, 23), aussi bien avec la solution d'étalonnage contenue dans le réservoir (15, 17, 26, 27) qu'avec le fluide.

2. Dispositif de mesure selon la revendication 1, **caractérisé en ce qu'**il est prévu un piston (16) comportant un réservoir (17) et un élément d'étanchéité (19) pouvant être guidé dans la cavité (10, 20, 25).

3. Dispositif de mesure selon la revendication 1, **caractérisé en ce qu'**il est prévu deux pistons (22, 23) possédant un réservoir (26, 27).

4. Dispositif de mesure selon au moins l'une des revendications 1 à 3, **caractérisé en ce que** la canule (18 24) ou un raccord de canule est guidé à travers l'élément d'étanchéité (19) et/ou à travers au moins un piston (16).

5. Dispositif de mesure selon au moins l'une des revendications 1 à 3, **caractérisé en ce que** la canule (18, 24) ou un raccord de canule est guidé de l'extérieur à travers la paroi (9, 21, 28) du récipient.

6. Dispositif de mesure selon l'une au moins des revendications 1 à 5, **caractérisé en ce que** la canule (18, 24) ou l'accès pour la canule est agencé de manière à pouvoir être fermé après le retrait de la canule (18, 24).

7. Dispositif de mesure selon au moins l'une des revendications 1 à 6, **caractérisé en ce que** le(les) capteur(s) (6, 7, 8) est(sont) fixé(s) sur la surface extérieure de la paroi (9, 21, 28) du récipient au moyen d'un passage (12), qui aboutit dans la cavité du récipient.

8. Dispositif de mesure selon au moins l'une des revendications 1 à 7, **caractérisé en ce que** le(les) capteur(s) (6, 7, 8) forme(nt) un capteur pour usage unique.

9. Dispositif de mesure selon au moins l'une des revendications 1 à 8, **caractérisé en ce que** le fluide est un liquide, tel que du sang ou de l'eau, ou un gaz, tel que l'air.

10. Dispositif de mesure selon au moins l'une des revendications 1 à 9, **caractérisé en ce que** le(les) capteur(s) (6, 7, 8) est(sont) une électrode sélective du point de vue des ions ou un biocapteur ou un capteur ampèremétrique ou un capteur optique ou un détecteur de gaz.

11. Dispositif de mesure selon au moins l'une des revendications 1 à 10, **caractérisé en ce que** le(les) capteur(s) (6, 7, 8) est(sont) une électrode sélective du point de vue des ions pour NH₄⁺ ou Ca²⁺ ou H⁺ ou Li⁺ ou K⁺ ou Na⁺ ou NO₃⁻.

12. Dispositif de mesure selon au moins l'une des revendications 1 à 11, **caractérisé en ce que** le(les) capteur(s) (6, 7, 8) est(sont) un biocapteur pour déterminer l'urée ou le glucose ou des pesticides.

13. Dispositif de mesure selon au moins l'une des revendications 1 à 12, **caractérisé en ce que** le(les) capteur(s) (6, 7, 8) est(sont) un capteur ampèremétrique pour la détermination de l'oxygène ou de métaux lourds.

14. Utilisation du dispositif de mesure selon au moins l'une des revendications 1 à 13 pour l'analyse de liquides et de gaz.

15. Utilisation du dispositif de mesure selon la revendication 14, **caractérisée en ce qu'**il est utilisé pour l'analyse du sang.

16. Utilisation du dispositif de mesure selon la revendication 15, **caractérisée en ce qu'**il est utilisé pour la détermination d'électrolytes du sang ou du glucose ou de l'urée ou de l'oxygène.

17. Utilisation du dispositif de mesure selon la revendication 14, **caractérisée en ce qu'**il est utilisé pour l'analyse de l'eau.

18. Utilisation du dispositif de mesure selon la revendication 17, **caractérisée en ce qu'**on détermine un nitrate ou des métaux lourds ou de l'oxygène ou des pesticides.

19. Utilisation du dispositif de mesure selon la revendication 14, **caractérisée en ce qu'**il est utilisé pour l'analyse de l'air.

20. Utilisation du dispositif de mesure selon la revendication 19, **caractérisée en ce qu'**on détermine le CO, CO₂ ou le NH₃.
